# EUROPÄISCHE PATENTSCHRIFT

(11) **EP 2 696 031 B1**
(45) Veröffentlichungstag und Bekanntmachung des Hinweises auf die Patenterteilung: **14.10.2015**
(21) Anmeldenummer: 12179769.0
(22) Anmeldetag: 09.08.2012
(51) Int. Cl.: F01D 5/20, F04D 29/16, F04D 29/68

(54) **Schaufel für eine Strömungsmaschine und zugehörige Strömungsmaschine**
Blade for a flow machine engine and corresponding flow machine engine.
Aube pour une turbomachine et turbomachine correspondante

(43) Veröffentlichungstag der Anmeldung: 12.02.2014
(73) Patentinhaber: MTU Aero Engines AG, 80995 München (DE)
(72) Erfinder: Geppert, Johann, 82299 Türkenfeld (DE); Dr. Eibelshäuser, Peter, 81247 München (DE); Rauschmair, Heinz, 86391 Stadtbergen (DE)
(74) Vertreter: Marschall, Stefan

(56) Entgegenhaltungen:
- EP-A2- 1 930 547
- DE-A1- 4 436 186
- DE-A1-102009 036 406
- DE-T2- 69 506 890
- US-A- 899 319

## Beschreibung

Die Erfindung betrifft eine Schaufel für eine Strömungsmaschine nach dem Oberbegriff des Patentanspruchs 1 und eine Strömungsmaschine.

Schaufelspitzen von Schaufeln in Strömungsmaschinen, beispielsweise von Laufschaufeln in Flugzeugtriebwerken, sind regelmäßig Schwingspannungen ausgesetzt. Die Schwingspannungen können sich beispielsweise durch Risse entweder in einer spitzenseitigen Panzerung und/oder im Blattgrundkörper äußern. Zur Reduzierung von Schwingspannungen in den Schaufelspitzen ist es seit langem bekannt, die Schaufelspitzen gegenüber benachbarten Blattabschnitten querschnittverjüngt auszubilden. Derartige als "Squealer Tip" bezeichnete Schaufelspitzen sind in vielfachen Ausführungen bekannt und können sowohl beidseitig, d.h. druckseitig und saugseitig, als auch nur einseitig, d.h. beispielsweise nur druckseitig, ausgebildet sein. So wird zum Beispiel in dem deutschen Gebrauchsmuster DE 94 22 418 U1 eine Schaufelspitze einer Laufschaufel gezeigt, die ausgehend von einer Anströmkante in Richtung einer Abströmkante tropfenförmig ausgebildet ist. Ihre Ausrichtung ist dabei derart, dass sie sich in Richtung der Abströmkante verjüngt. In der internationalen Patentanmeldung WO 2006/015899 A1 wird eine Schaufelspitze einer Laufschaufel beschrieben, die einen sich von einer Anströmkante zu einer Abströmkante erstreckenden Kantsteg mit einem konstanten Querschnitt aufweist. In der deutschen Patentanmeldung DE 10 2005 006 414 A1 ist eine Schaufelspitze einer Blisk gezeigt, die nur eine druckseitige Tasche aufweist. Diese bekannten Ausbildungen der Schaufelspitzen führen zwar zu einer Reduzierung der Schwingungsbelastungen im Schaufelspitzenbereich, weisen jedoch noch ein erhebliches Verbesserungspotential auf. Weiterer Stand der Technik ist aus der DE 44 36 186 A1, EP 1 930 547 A2, DE 695 06 890 T2, US 899 319 A und aus der DE 10 2009 036406 bekannt,

Aufgabe der Erfindung ist es, eine Schaufel für eine Strömungsmaschine zu schaffen, die eine wirksame Reduzierung von Schwingspannungen im Blattspitzenbereich aufweist. Des Weiteren ist es Aufgabe der Erfindung, eine Strömungsmaschine mit einem verbesserten Wirkungsgrad zu schaffen.

Diese Aufgabe wird gelöst durch eine Schaufel für eine Strömungsmaschine mit den Merkmalen des Patentanspruchs 1 und durch eine Strömungsmaschine mit den Merkmalen des Patentanspruchs 11.

Eine erfindungsgemäße Schaufel für eine Strömungsmaschine, insbesondere ein Flugzeugtriebwerk, hat ein Schaufelblatt, das eine Anströmkante und eine zu dieser entgegengesetzte Abströmkante hat, die sich jeweils in Hauptrichtung der Schaufel erstrecken und in Längsrichtung der Schaufel voneinander beabstandet sind. Zudem hat das Schaufelblatt eine sich zwischen der Anströmkante und der Abströmkante erstreckende Druckseitenwandung sowie eine zur Druckseitenwandung entgegengesetzte Saugseitenwandung. Ferner hat das Schaufelblatt eine die Druck- und die Saugseitenwandung in Hauptrichtung begrenzende Schaufelspitze. Erfindungsgemäß ist die Schaufelspitze ausgehend von ihrem Mittelbereich zumindest über jeweils einen vorderen Teilbereich in Richtung der Anströmkante und über zumindest einen hinteren Teilbereich in Richtung der Abströmkante gegenüber dem Mittelbereich abnehmend querschnittsreduziert. Aus fertigungstechnischer und auch aerodynamischer Sicht ist es vorteilhaft, wenn die Schaufelspitze einen vorderen Endbereich und einen hinteren Endbereich hat, die nicht querschnittsverjüngt sind. Hierdurch sind die Endbereiche gegenüber der Saug- und der Druckseitenwandung nicht zurückgestuft und weisen eine ursprüngliche Profildicke bzw. einen ursprünglichen Profilverlauf auf.

Durch die von einem Mittelbereich ausgehende abnehmende Verjüngung in Richtung der Anströmkante und der Abströmkante sind zumindest die Teilbereiche gegenüber der Druckseitenwandung und/oder der Saugseitenwandung querschnittreduziert. Insbesondere haben zumindest die Teilbereiche in Längsrichtung betrachtet eine variierende Quererstreckung bzw. Breite. Die Schaufelspitze wird in Richtung der Anströmkante und der Abströmkante zumindest in den Teilbereichen dünner, wodurch eine maximale Querschnittsverjüngung nahe an die Anströmkante und die Abströmkante herangeführt werden kann. Schwingspannungen in Schwingungsknoten zwischen den Teilbereichen und der Anströmkante bzw. der Abströmkante werden gesenkt. Dies hat zur Folge, dass die erfindungsgemäße Schaufel im Blattspitzenbereich ein geringes Rissrisiko und somit eine längere Lebenserwartung als eine herkömmliche Laufschaufel unter gleichen Betriebsbedingungen zeigt. Aufgrund der reduzierten Schwingspannungen können zudem hochfeste Panzerungen wie cBn-Panzerungen (kubisch kristallines Bornitrid-Panzerungen) verlässlich aufgebracht werden.

Bei einem bevorzugten Ausführungsbeispiel ist der Mittelbereich gegenüber der Druckseitenwandung und/oder der Saugseitenwandung ebenfalls querschnittreduziert. Hierdurch können die Schwingspannungen weiter reduziert werden. Bevorzugterweise ist der Mittelbereich ebenfalls in Richtung der Anströmkante und der Abströmkante abnehmend querschnittsreduziert.

Bevorzugterweise sind der Mittelbereich und die beiden Teilbereiche beidseitig querschnittreduziert. Hierdurch sind der Mittelbereich sowie die Teilbereiche sowohl gegenüber der Druckseitenwandung als auch gegenüber der Saugseitenwandung zurückgestuft, wodurch der Mittelbereich und die Teilbereiche symmetrisch zur neutralen Fase ausgerichtet werden können. Zudem können die Teilbereiche in Richtung der Anströmkante und der Abströmkante sehr schmal ausgeführt werden und insbesondere die jeweilige maximale Querschnittsverjüngung sehr nah an die neutrale Faser herangeführt werden.

Aus aerodynamischer Sicht ist vorteilhaft, wenn der Mittelbereich und die Teilbereiche ein tragflächenartiges Profil bilden. Der Mittelbereich und die Teilbereiche haben somit eine druckseitige Seitenfläche und eine entgegengesetzte saugseitige Seitenfläche, deren Abstand ausgehend vom Mittelbereich über die Teilbereiche in Richtung der Anströmkante und der Abströmkante stetig verjüngt ist.

Aus aerodynamischer Sicht ist es zudem vorteilhaft, wenn die Druckseitenwandung und die Saugseitenwandung maximiert sind. Zur Reduzierung von Schwingspannungen im Schaufelspitzenbereich ist es jedoch vorteilhaft, wenn die als Squealer Tip ausgebildete Schaufelspitze eine große Erstreckung in Hauptrichtung bzw. Höhe hat. Als Kompromiss zwischen diesen beiden Anforderungen sieht daher ein Ausführungsbeispiel vor, dass sich die saugseitige Seitenfläche und die druckseitige Seitenfläche des Mittelbereichs und der beiden Teilbereiche senkrecht bzw. nahezu senkrecht von jeweils einer orthogonal bzw. nahezu orthogonal zur Druckseitenwandung und zur Saugseitenwandung verlaufenden Stufenfläche erstrecken. Die Stufenflächen tragen nicht zur Höhe der Schaufelspitzen bei, so dass die Seitenflächen eine größtmögliche Höhe haben können. Dadurch, dass sich die Seitenflächen senkrecht bzw. nahezu senkrecht zu den Stufenflächen erstrecken, haben der Mittelbereich und die Teilbereiche über ihre Höhe eine konstante Breite. Aus strukturmechanischer Sicht ist es vorteilhaft, wenn zwischen den Stufenflächen und den Seitenflächen jeweils eine Verrundung gebildet ist. Die Verrundung hat bevorzugterweise einen kleinen Radius.

Bei einem anderen Ausführungsbeispiel erstrecken sich die Seitenflächen jeweils von einer druckseitigen Schrägfläche und von einer saugseitigen Schrägfläche. Hierdurch sind die Seitenflächen bei unveränderter Schaufelblatthöhe zwar niedriger als bei dem vorhergehenden Ausführungsbeispiel mit den Stufenflächen, jedoch lässt sich dieses Ausführungsbeispiel fertigungstechnisch bequem ausbilden. Vorzugsweise gehen die Druckseitenwandung und die Saugseitenwandung unmittelbar in die Schrägflächen über. Die Schrägflächen können sich jedoch auch von Stufenflächen erstrecken.

Bei einem weiteren Ausführungsbeispiel sind die Seitenflächen im Querschnitt betrachtet als Konkavflächen ausgebildet. Vorzugsweise gehen die Druckseitenwandung und die Saugseitenwandung unmittelbar in die Konkavflächen über. Allerdings ist zur Erzielung einer ausreichenden Querschnittsverjüngung ein großer Radius notwendig, so dass bei unveränderter Schaufelblatthöhe durch den verhältnismäßig großen Radius die Druckseitenwandung und die Saugseitenwandung gegenüber den vorherigen Ausführungsbeispielen in Hauptrichtung verkürzt sind. Alternativ erstrecken sich die Konkavflächen von Stufenflächen oder Schrägflächen.

Vorzugsweise sind die Seitenflächen bzw. Konkavflächen kopfseitig über eine Planfläche miteinander verbunden sind. Eine derartige Planfläche lässt sich bequem mit einer Panzerung versehen.

Die Schaufelspitze hat vorzugsweise eine konstante Erstreckung in Hauptrichtung und somit eine konstante Höhe. Hierdurch haben der Mittelbereich, die Teilbereiche und die Endbereiche eine einheitliche Höhe, was sich günstig auf eine Radialspaltabdichtung im Schaufelspitzenbereich auswirkt

Bei alternativen Ausführungsbeispielen sind der Mittelbereich und/oder die beiden Teilbereiche nur einseitig querschnittreduziert. Der Mittelbereich und/oder die beiden Teilbereiche sind entweder gegenüber der Saugseitenwandung oder gegenüber der Druckseitenwandung in Richtung der Anströmkante und der Abströmkante verjüngt. Rückseitig von der Verjüngung aus betrachtet wird das jeweilige Profil der Druckseitenwandung oder der Saugseitenwandung fortgeführt.

Eine bevorzugte Strömungsmaschine hat zumindest eine Schaufelreihe, die von den erfindungsgemäßen Schaufeln gebildet wird. Insbesondere sind die Schaufeln Laufschaufeln. Eine derartige Schaufelreihe besteht aus Schaufeln, deren Schwingspannungen im Spitzenbereich gegenüber herkömmlichen Schaufeln mit verjüngten Schaufelspitzen reduziert sind. Hierdurch sind die Schaufeln höher belastbar als die bekannten Schaufeln, wodurch deren Lebensdauer gesteigert und der Wirkungsgrad der Strömungsmaschine verbessert werden kann.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: ein erstes Ausführungsbeispiel einer erfindungsgemäßen Schaufel mit einer beidseits verjüngten Schaufelsitze aus der Vogelperspektive,
- Figur 2: eine druckseitige Ansicht der Schaufel aus Figur 1 im Bereich der Schaufelspitze,
- Figur 3: eine saugseitige Ansicht der Schaufel aus Figur 1 im Bereich der Schaufelspitze,
- Figur 4: einen Querschnitt durch die Schaufel aus Figur 1 im Schaufelspitzenbereich,
- Figuren 5 und 6: Querschnitte durch Schaufeln im Schaufelspitzenbereich mit weiteren beidseitig verjüngten Schaufelspitzenbeispielen, und
- Figuren 7 bis 12: Querschnitte durch Schaufeln im Schaufelspitzenbereich mit einseitig verjüngten Schaufelspitzenbeispielen.

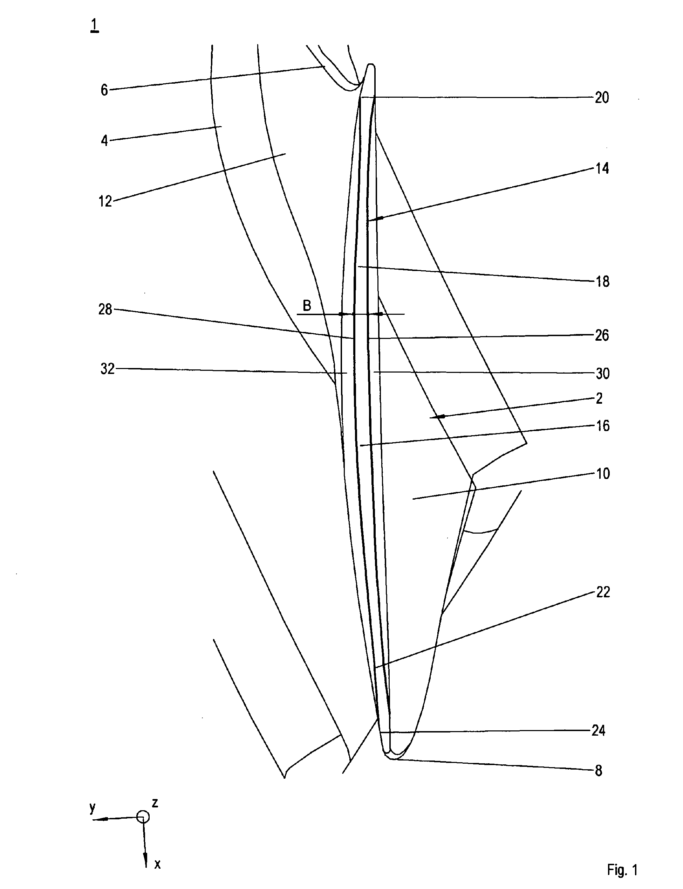

In Figur 1 ist eine Draufsicht auf eine Laufschaufel 1 einer Strömungsmaschine in Hauptrichtung z gezeigt. Die Laufschaufel 1 kann sowohl turbinen- als auch verdichterseitig angeordnet sein. Beispielsweise bildet die Laufschaufel 1 mit identischen Laufschaufeln eine Laufschaufelreihe eines Hochdruckverdichters. Die Strömungsmaschine ist bevorzugterweise eine axiale Strömungsmaschine und insbesondere ein Flugzeugtriebwerk.

Die Laufschaufel 1 hat ein Schaufelblatt 2, das sich in Hauptrichtung z der Laufschaufel 1 von einer Plattform 4 erstreckt. Das Schaufelblatt 2 hat eine Anströmkante 6 und eine zu dieser entgegengesetzte Abströmkante 8, die in Hauptrichtung z verlaufen und in Längsrichtung x der Laufschaufel 1 voneinander beabstandet sind. Zwischen der Anströmkante 6 und der Abströmkante 8 erstreckt sich eine Druckseitenwandung 10 sowie ein zur Druckseitenwandung 10 entgegengesetzte Saugseitenwandung 12. Die Druckseitenwandung 10 und die Saugseitenwandung 12 bilden ein Schaufelblattprofil und werden in Hauptrichtung z von einer Schaufelspitze 14 begrenzt.

Die Schaufelspitze 14 hat einen Mittelbereich 16, einen stromaufwärts einer Schaufelblattzuströmung betrachtet vorderen Teilbereich 18, einen vorderen Endbereich 20, einen stromabwärts einer Schaufelblattzuströmung betrachtet hinteren Teilbereich 22 sowie einen hinteren Endbereich 24. Die Bereiche 16, 18, 20, 22, 24 liegen vorzugsweise auf einer Skelettlinie des Schaufelblattes 2 und erstrecken sich in Querrichtung y symmetrisch bzw. in etwa symmetrisch zu dieser.

Der Mittelbereich 16 ist mittig zwischen der Anströmkante 6 und der Abströmkante 8 angeordnet. Der vordere Teilbereich 18 erstreckt sich stromaufwärts des Mittelbereichs 16 und geht in den vorderen Endbereich 20 über, der die Anströmkante 6 ausbildet. Der hintere Teilbereich 22 erstreckt sich stromabwärts des Mittelbereichs 16 und geht in den hinteren Endbereich 24 über, der die Abströmkante 8 ausbildet.

Die Teilbereiche 18, 22 sind gegenüber dem Mittelbereich 16 ausgehend von diesem in Richtung ihres jeweiligen Endbereiches 20, 24 in Querrichtung y verjüngt und somit abnehmend querschnittreduziert. Somit haben sie im Bereich des Mittelbereichs 16 ihre größte und unmittelbar an den Endbereichen 20, 24 ihre kleinste Quererstreckung bzw. Breite B. Zudem ist der Mittelbereich 16 gegenüber der Druckseitenwandung 10 sowie der Saugseitenwandung 12 in Richtung der Anströmkante 6 und der Abströmkante 8 abnehmend querschnittsreduziert. Insbesondere bilden der Mittelbereich 16 und die Teilbereiche 18, 22 gemäß der Draufsicht in Figur 1 zusammen ein tragflächenartiges Profil mit einer druckseitigen konkaven Seitenfläche 26 und mit einer zu dieser entgegengesetzten saugseitigen konvexen Seitenfläche 28, deren Querabstand ausgehend vom bereits querschnittsverjüngten Mittelbereich 16 stromaufwärts und stromabwärts gleichmäßig bzw. im Wesentlichen symmetrisch zur Skelettlinie weiter reduziert wird.

Die Endbereich 20, 24 sind gegenüber der Druckseitenwandung 10 und der Saugseitenwandung 12 nicht verjüngt. Sie nehmen das Schaufelblattprofil der Druckseitenwandung 10 und der Saugseitenwandung 12 jeweils auf und haben somit gemäß der Darstellung in Figur 1 in Draufsicht eine pfeilartige Gestalt. Da die Teilbereiche 18, 22 und somit die maximalen Querschnittsverjüngungen der Schaufelspitze 14 sehr nah an die Anströmkante 6 und die Abströmkante 8 herangeführt sind, sind die Endbereiche 20, 24 in Längsrichtung x betrachtet sehr kurz ausgebildet. Vorzugsweise gehen die Teilbereiche 18, 22 über nicht bezifferte Verrundungen in die Endbereiche 20, 24 über. Aufgrund der beidseitigen Verjüngung des Mittelbereiches 16 sowie der Teilbereiche 18, 20 sind seitlich von diesen Stufenflächen 30, 32 geschaffen, die sich bei diesem Ausführungsbeispiel orthogonal bzw. nahezu orthogonal zur Druckseitenwandung 10 sowie zur Saugseitenwandung 12 erstrecken. Somit sind Stufenflächen 30, 32 flach und konturlos.

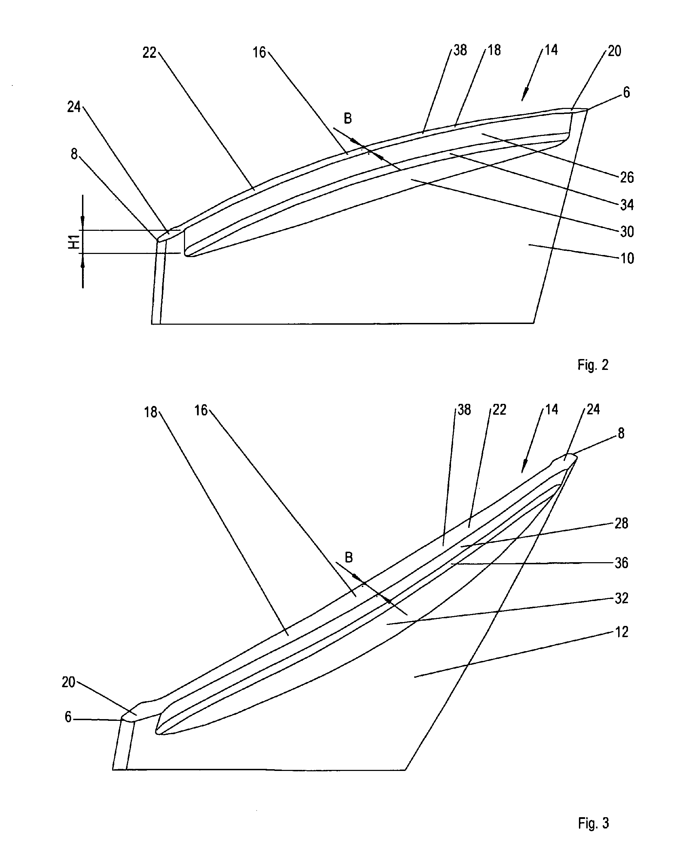

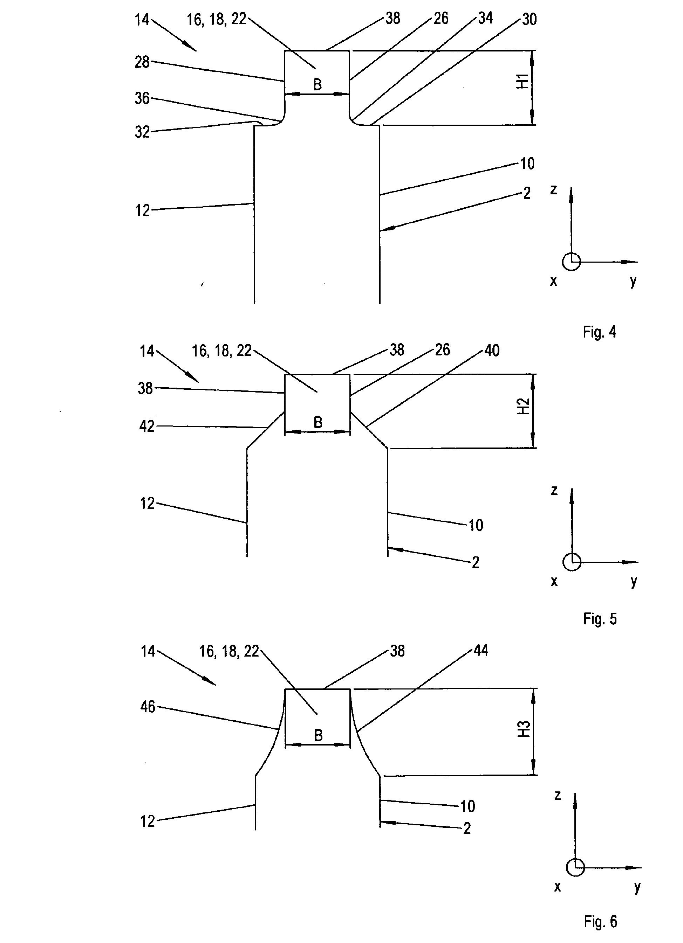

Wie in den Figuren 2 und 3 dargestellt, erstrecken sich die Seitenflächen 26, 28 senkrecht von der jeweiligen Stufenfläche 30, 32. Hierdurch sind die Seitenflächen 26, 28 in Hauptrichtung z betrachtet gerade und somit steil ausgebildet. Aus strukturmechanischer Sicht ist vorzugsweise im Übergangsbereich 34, 36 der Stufenflächen 30, 32 zur jeweiligen Seitenfläche 26, 28 ein kleiner Radius abgetragen ist. Wie zudem in den Figuren 2 und 3 gezeigt, haben die Seitenflächen 26, 28 eine konstante Höhe H₁. Der Mittelbereich 16 und die Teilbereiche 18, 22 haben eine zu ihnen orthogonal verlaufende plane Kopffläche 38, die sich über die Endbereiche 20, 24 hinaus zur Anströmkante 6 und zur Abströmkante 8 erstreckt. Somit hat die Schaufelspitze 14 über sämtliche ihrer Bereiche 16 bis 24 die konstante Höhe H₁. Da die Stufenflächen 30, 32 flach ausgebildet sind, tragen sie nicht zur Höhe H₁ bei. Wie in Figur 4 skizziert, ist die in Längsrichtung x variierende Breite B des Mittelbereichs 16 und der beiden Teilbereiche 18, 22 in Hauptrichtung z betrachtet konstant. Die Breite B variiert nur in Längsrichtung x, wobei sie in Richtung der Anströmkante 6 und der Abströmkante 8 ausgehend vom gegenüber der Druckwandung 10 und der Seitenwandung 12 verjüngten Mittelbereich 16 über die Teilbereiche 18, 22 jeweils abnimmt.

In Figur 5 ist ein Querschnitt einer erfindungsgemäßen Schaufel 1 mit einer beispielhaften Schaufelspitze 14 gezeigt, die sowohl druck- als auch saugseitig verjüngt ist. Im Unterschied zum vorhergehenden ersten Ausführungsbeispiel nach den Figuren 1 bis 4 erstrecken sich Seitenflächen 26, 28 bei diesem Ausführungsbeispiel jeweils von einer druckseitigen und einer saugseitigen Schrägfläche 40, 42 und nicht von einer Stufenfläche 30, 32. Die Schrägflächen sind unmittelbar mit der Druckseitenwandung 10 und der Saugseitenwandung 12 verbunden, so dass diese direkt in die Schrägflächen 40, 42 übergehen. Die Ausrichtung der Seitenflächen 26, 28 ist gegenüber dem ersten Ausführungsbeispiel nach den Figuren 1 bis 4 unverändert, so dass bei unveränderter Schaufelblatthöhe die Seitenflächen 26, 28 im Vergleich zum ersten Ausführungsbeispiel kleiner bzw. kürzer ausgebildet sind. Die Schrägstellung der Schrägflächen 40, 42 und die reduzierte Höhe der Seitenflächen 26, 28 ist so gewählt, dass eine Höhe H₂ der Schaufelspitze 14 gleich der Höhe H₁ des ersten Ausführungsbeispiels. Somit weisen auch die Druckseitenwandung 10 und die Saugseitenwandung 12 dieser beiden Ausführungsbeispiele die gleiche Erstreckung in Hauptrichtung z auf. Die Kopffläche 38 ist gemäß dem ersten Ausführungsbeispiel als orthogonale Planfläche ausgebildet.

In Figur 6 ist ein Querschnitt einer erfindungsgemäßen Laufschaufel 1 mit einer beispielhaften Schaufelspitze 14 gezeigt, die weder Stufenflächen 26, 28, noch Schrägflächen 40, 42 aufweist. Im Unterschied zu dem vorhergehenden ersten und zweiten Ausführungsbeispiel sind Seitenflächen des Mittelbereichs 16 und der Teilbereiche 18, 22 als sich in Querrichtung y und Hauptrichtung z erstreckende Konkavflächen 44, 46 ausgebildet. Die Konkavflächen 44, 46 erstrecken sich unmittelbar von einer Druckseitenwandung 10 und einer Saugseitenwandung 12 und haben vorzugsweise einen konstanten Radius. Der Radius ist derart, dass ihre Tangenten im Bereich einer vorzugsweisen planen Kopffläche 38 in Hauptrichtung z verlaufen. Aufgrund des verhältnismäßig großen Radius ist zur Einstellung einer ausreichenden Querschnittsverjüngung eine Höhe H₃ der Schaufelspitze 14 größer als die Höhen H₁, H₂ des ersten und des zweiten Ausführungsbeispiels. Da das Schaufelblatt 2 jedoch eine konstante Blatthöhe hat, sind die Druckseitenwandung 10 und die Saugseitenwandung 12 gegenüber dem ersten und zweiten Ausführungsbeispiel in Hauptrichtung z betrachtet niedriger bzw. verkürzt ausgebildet.

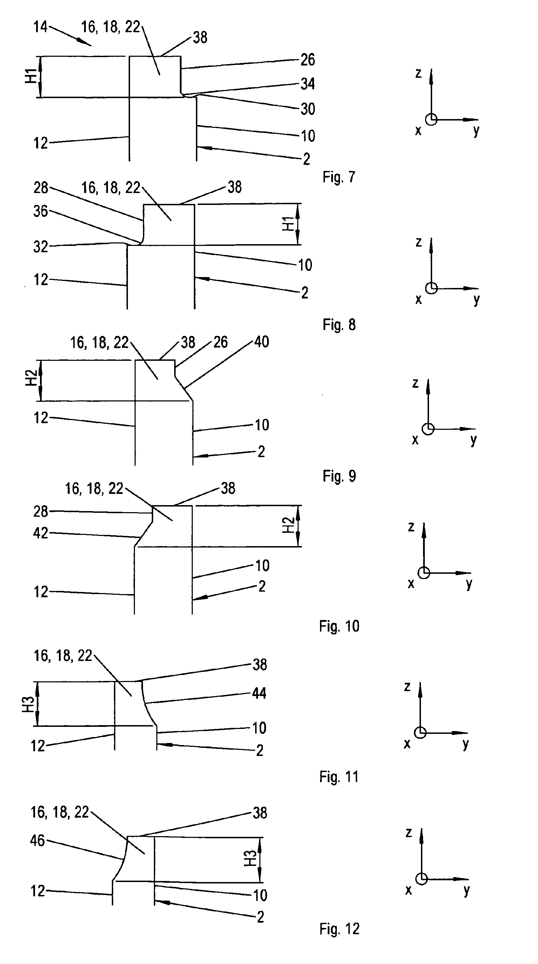

In den Figuren 7 bis 12 ist jeweils ein Ausführungsbeispiel gezeigt, bei dem Schaufelspitzen 14 einseitig, d.h. entweder druckseitig oder saugseitig, mit einer erfindungsgemäßen variierenden Verjüngung bzw. Breite B in Längsrichtung x versehen sind. Sämtliche einseitige Schaufelspitzen 14 haben einen gegenüber einem Mittelbereich 16 in Richtung einer Anströmkante 6 querschnittsverjüngten vorderen Teilbereich 18 sowie einen in Richtung einer Abströmkante 8 querschnittsverjüngten hinteren Teilbereich 22. Ebenso ist der Mittelbereich 16 gegenüber einer Druckseitenwandung 10 oder einer Saugseitenwandung 12 in Richtung der Anströmkante 6 und der Abströmkante 8 querschnittsverjüngt. Endbereiche 20, 24 der Schaufelspitze 14 sind analog zu den beidseitigen Ausführungsbeispielen nach den Figuren 1 bis 7 nicht querschnittsverjüngt. Die nicht querschnittsverjüngten Endbereiche 20, 24 der Schaufelspitze 14 führen jeweils ein Schaufelblattprofil druckseitig oder saugseitig fort.

In Figur 7 ist eine nur druckseitig verjüngte Schaufelspitze 14 mit einer orthogonalen druckseitigen Stufenfläche 30 und einer sich von dieser senkrecht erstreckenden bzw. in Hauptrichtung z gerade verlaufenden druckseitigen Seitenfläche 26 gezeigt. Saugseitig weist die Schaufelspitze 14 das Schaufelblattprofil auf.

In Figur 8 ist eine nur saugseitig verjüngte Schaufelspitze 14 mit einer orthogonalen saugseitigen Stufenfläche 32 und mit einer gerade verlaufenden saugseitigen Seitenfläche 28 gezeigt. Druckseitig weist die Schaufelspitze 14 das Schaufelblattprofil auf.

In Figur 9 ist eine nur druckseitig verjüngte Schaufelspitze 14 gezeigt, bei der die Druckseitenwandung 10 über eine druckseitige Schrägfläche 40 in eine gerade druckseitige Seitenfläche 26 übergeht. Saugseitig weist die Schaufelspitze 14 das Schaufelblattprofil auf.

In Figur 10 ist eine nur saugseitig verjüngte Schaufelspitze 14 gezeigt, bei der die Saugseitenwandung 12 über eine saugseitige Schrägfläche 42 in eine gerade saugseitige Seitenfläche 28 übergeht. Druckseitig weist die Schaufelspitze 14 das Schaufelblattprofil auf.

In Figur 11 ist eine nur druckseitig verjüngte Schaufelspitze 14 gezeigt, die anstelle einer geraden Seitenfläche 26 in Kombination mit einer Stufenfläche 30 oder einer Schrägfläche 40 eine sich in Querrichtung y und Hauptrichtung z erstreckende druckseitige Konkavfläche 44 aufweist. Saugseitig weist die Schaufelspitze 14 das Schaufelblattprofil auf.

In Figur 12 ist eine nur saugseitig verjüngte Schaufelspitze 14 gezeigt, die eine saugseitige Konkavfläche 46 aufweist. Druckseitig weist die Schaufelspitze 14 das Schaufelblattprofil auf.

Neben den in den vorhergehenden Figuren gezeigten Ausführungsbeispielen sind selbstverständlich weitere Schaufelspitzengeometrien möglich, die vom Schutzbereich der Patentansprüche mit umfasst sind. Beispielweise ist es vorstellbar, lediglich die Teilbereiche 18, 20 entlang der Längsrichtung x einseitig oder beidseitig querschnittsverjüngt auszubilden und den Mittelbereich 16 nicht querschnittsverjüngt auszubilden, sondern das Schaufelblattprofil über den Mittebereich 16 hinauszuführen.

Offenbart ist eine Schaufel für eine Strömungsmaschine, insbesondere ein Flugzeugtriebwerk, deren Schaufelspitze ausgehend von ihrem Mittelbereich zumindest über jeweils einen vorderen Teilbereich in Richtung der Anströmkante und über zumindest einen hinteren Teilbereich in Richtung der Abströmkante gegenüber dem Mittelbereich querschnittreduziert ist, sowie eine Strömungsmaschine mit zumindest einer aus derartigen Schaufeln gebildeten Schaufelreihe.

### Bezugszeichenliste

- 1: Laufschaufel
- 2: Schaufelblatt
- 4: Plattform
- 6: Anströmkante
- 8: Abströmkante
- 10: Druckseitenwandung
- 12: Saugseitenwandung
- 14: Schaufelspitze
- 16: Mittelbereich
- 18: vorderer Teilbereich
- 20: vorderen Endbereich
- 22: hinterer Teilbereich
- 24: hinterer Endbereich
- 26: Seitenfläche
- 28: Seitenfläche
- 30: Stufenfläche
- 32: Stufenfläche
- 34: Übergangsbereich
- 36: Übergangsbereich
- 38: Kopffläche
- 40: Schrägfläche
- 42: Schrägfläche
- 44: Konkavfläche
- 46: Konkavfläche
- B: Breite
- H₁, H₂, H₃: Höhe
- z: Hauptrichtung
- x: Längsrichtung
- y: Querrichtung

## Patentansprüche

1. Schaufel (1) für eine Strömungsmaschine, insbesondere ein Flugzeugtriebwerk, mit einem Schaufelblatt (2), das eine Anströmkante (6) und eine zu dieser entgegengesetzte Abströmkante (8) hat, die sich jeweils in Hauptrichtung (z) der Schaufel (1) erstrecken und in Längsrichtung (x) der Schaufel (1) voneinander beabstandet sind, wobei das Schaufelblatt (2) zudem eine sich zwischen der Anströmkante (6) und der Abströmkante (8) erstreckende Druckseitenwandung (10) sowie eine zur Druckseitenwandung (10) entgegengesetzte Saugseitenwandung (12) hat, und wobei das Schaufelblatt (2) eine die Druck- und die Saugseitenwandung (10, 12) in Hauptrichtung (z) begrenzende Schaufelspitze (14) hat, wobei ein Mittelbereich (16), der mittig zwischen der Anströmkante (6) und der Abströmkante (8) angeordnet ist, und ein vorderer Teilbereich (18) in Richtung der Anströmkante (6) und ein hinterer Teilbereich (22) in Richtung der Abströmkante (8) zumindest einseitig querschnittsreduziert gegenüber einer Druckseitenwandung (10) oder einer Saugseitenwandung (12) sind, **dadurch gekennzeichnet, dass** die Schaufelspitze (14) ausgehend von ihrem Mittelbereich (16)zumindest über jeweils den vorderen Teilbereich (18) in Richtung der Anströmkante (6) und über den hinteren Teilbereich (18, 22) in Richtung der Abströmkante (8) gegenüber dem Mittelbereich (16) abnehmend querschnittsreduziert ist, wobei die Schaufelspitze (14) einen vorderen Endbereich (20) und einen hinteren Endbereich (24) hat, die nicht querschnittsverjüngt sind.

2. Schaufel nach Anspruch 1, wobei der Mittelbereich (16) gegenüber der Druckseitenwandung (10) und der Saugseitenwandung (12) querschnittsreduziert ist.

3. Schaufel nach Anspruch 1, wobei der Mittelbereich (16) und die beiden Teilbereiche (18, 22) beidseitig querschnittsreduziert sind.

4. Schaufel nach Anspruch 1, 2 oder 3, wobei der Mittelbereich (16) und die Teilbereiche (18, 22) ein tragflächenartiges Profil bilden.

5. Schaufel nach einem der vorhergehenden Ansprüche, wobei der vordere Endbereich (20) und der hintere Endbereich (24) in die Anströmkante (6) bzw. in die Abströmkante (8) übergehen und jeweils einen Profilverlauf der Druckseitenwandung (10) und der Saugseitenwandung (12) fortführen.

6. Schaufel nach einem der Ansprüche 2 bis 5, wobei der Mittelbereich (16) und die beiden Teilbereiche (18, 22) zwei voneinander abgewandte Seitenflächen (26, 28) haben, die sich druckseitig und saugseitig senkrecht jeweils von einer orthogonal zur Druckseitenwandung (10) und zur Saugseitenwandung (12) verlaufenden Stufenfläche (30, 32) erstrecken.

7. Schaufel nach einem der Ansprüche 2 bis 5, wobei sich die Seitenflächen (26, 28) von einer druckseitigen Schrägfläche (40) bzw. einer saugseitigen Schrägfläche (40) erstrecken.

8. Schaufel nach einem der Ansprüche 2 bis 5, wobei die Seitenflächen als Konkavfläche (44, 46) ausgebildet sind.

9. Schaufel nach einem der Ansprüche 6 bis 8, wobei die Seitenflächen (26, 28, 44, 46) kopfseitig über eine Planfläche (38) miteinander verbunden sind.

10. Schaufel nach einem der vorhergehenden Ansprüche, wobei die Schaufelspitze (14) über ihre Bereiche (16, 18, 20, 22, 24) eine konstante Erstreckung in Hauptrichtung (z) hat.

11. Strömungsmaschine mit zumindest einer Schaufelreihe aus einer Vielzahl von Schaufeln (1) nach einem der vorhergehenden Ansprüche.

## Claims

1. Blade (1) for a continuous flow machine, in particular an aircraft engine, having a blade leaf (2) which has a leading edge (6) and a trailing edge (8) opposite this, which both extend in the main direction (z) of the blade (1) and are spaced apart from each other in the longitudinal direction (x) of the blade (1), wherein the blade leaf (2) also has a pressure-side wall (10) extending between the leading edge (6) and the trailing edge (8) as well as a suction-side wall (12) opposite the pressure-side wall (10), and wherein the blade leaf (2) has a blade tip (14) which delimits the pressure-side and suction-side walls (10, 12) in the main direction (z), wherein a central region (16), which is arranged centrally between the leading edge (6) and the trailing edge (8), and a front partial region (18) in the direction of the leading edge (6) and a rear partial region (22) in the direction of the trailing edge (8), have a reduced cross section at least on one side compared to a pressure-side wall (10) or a suction-side wall (12), **characterised in that** the blade tip (14) has a decreasingly reduced cross section starting from its central region (16) at least across both the front partial region (18) in the direction of the leading edge (6) and across the rear partial region (18, 22) in the direction of the trailing edge (8) compared to the central region (16), wherein the blade tip (14) has a front end region (20) and a rear end region (24) which do not have tapered cross sections.

2. Blade according to claim 1, wherein the central region (16) opposite the pressure-side wall (10) and the suction-side wall (12) has a reduced cross section.

3. Blade according to claim 1, wherein the central region (16) and both partial regions (18, 22) have reduced cross sections on both sides.

4. Blade according to claim 1, 2 or 3, wherein the central region (16) and the partial regions (18, 22) form a wing-like profile.

5. Blade according to one of the preceding claims, wherein the front end region (20) and the rear end region (24) pass into the leading edge (6) or into the trailing edge (8) and each continue a profile pattern of the pressure-side wall (10) and the suction-side wall (12).

6. Blade according to one of claims 2 to 5, wherein the central region (16) and the two partial regions (18, 22) have two lateral surfaces (26, 28) which face away from each other, said lateral surfaces (26, 28) extending on the pressure-side and on the suction-side in both cases perpendicularly from a step surface (30, 32) which runs orthogonally to the pressure-side wall (10) and to the suction-side wall (12).

7. Blade according to one of claims 2 to 5, wherein the lateral surfaces (26, 28) extend from a pressure-side bevel (40) or a suction-side bevel (40).

8. Blade according to one of claims 2 to 5, wherein the lateral surfaces are formed as concave surfaces (44, 46).

9. Blade according to one of claims 6 to 8, wherein the lateral surfaces (26, 28, 44, 46) are connected to one another via a flat surface (38) at the head end.

10. Blade according to one of the preceding claims, wherein the blade tip (14) has a constant extension in the main direction (z) across its regions (16, 18, 20, 22, 24).

11. Continuous flow machine having at least one blade row formed of a plurality of blades (1) according to one of the preceding claims.

## Revendications

1. Aube (1) pour une turbomachine, en particulier un moteur d'aéronef, avec une pale (2) présentant un bord d'attaque (6) et un bord de fuite (8) opposé à celui-ci, s'étendant respectivement dans la direction principale (z) de l'aube (1) et dans la direction longitudinale (x) de l'aube (1) en étant espacés l'un de l'autre, dans laquelle la pale (2) présente en outre une paroi côté de refoulement (10) s'étendant entre le bord d'attaque (6) et le bord de fuite (8) ainsi qu'une paroi côté d'aspiration (12) opposée à la paroi côté de refoulement (10), et dans laquelle la pale (2) présente une pointe d'aube (14) délimitant la paroi côté de refoulement et la paroi côté d'aspiration (10, 12) dans la direction principale (z), dans laquelle une zone médiane (16), disposée centralement entre le bord d'attaque (6) et le bord de fuite (8), et une zone partielle avant (18) dans la direction du bord d'attaque (6) et une zone partielle arrière (22) dans la direction du bord de fuite (8) ont une section transversale au moins unilatéralement réduite par rapport à une paroi côté de refoulement (10) ou à une paroi côté d'aspiration (12), **caractérisée en ce que** la pointe d'aube (14) a une section transversale progressivement réduite par rapport à la zone médiane (16), à partir de sa zone médiane (16) au moins sur la zone partielle avant (18) dans la direction du bord d'attaque (6) et sur la zone partielle arrière (18, 22) dans la direction du bord de fuite (8), respectivement, la pointe d'aube (14) présentant une zone d'extrémité avant (20) et une zone d'extrémité arrière (24) dont les sections transversales ne sont pas réduites.

2. Aube selon la revendication 1, dans laquelle la zone médiane (16) a une section transversale réduite par rapport à la paroi côté de refoulement (10) et la paroi côté d'aspiration (12).

3. Aube selon la revendication 1, dans laquelle la zone médiane (16) et les deux zones partielles (18, 22) ont une section transversale réduite bilatéralement.

4. Aube selon la revendication 1, 2 ou 3, dans laquelle la zone médiane (16) et les zones partielles (18, 22) forment un profil à surface porteuse.

5. Aube selon l'une des revendications précédentes, dans laquelle la zone d'extrémité avant (20) et la zone d'extrémité arrière (24) se prolongent respectivement par le bord d'attaque (6) et le bord de fuite (8) et continuent un tracé de profil respectif de la paroi côté de refoulement (10) et de la paroi côté d'aspiration (12).

6. Aube selon l'une des revendications 2 à 5, dans laquelle la zone médiane (16) et les deux zones partielles (18, 22) présentent deux surfaces latérales (26, 28) opposées l'une à l'autre, qui s'étendent perpendiculairement chacune côté de refoulement et côté d'aspiration depuis une surface en épaulement (30, 32) orthogonale à la paroi côté de refoulement (10) et à la paroi côté d'aspiration (12).

7. Aube selon l'une des revendications 2 à 5, dans laquelle les surfaces latérales (26, 28) s'étendent depuis une surface oblique (40) côté de refoulement ou une surface oblique (40) côté d'aspiration.

8. Aube selon l'une des revendications 2 à 5, dans laquelle les surfaces latérales sont réalisées comme surfaces concaves (44, 46).

9. Aube selon l'une des revendications 6 à 8, dans laquelle les surfaces latérales (26, 28, 44, 46) sont reliées l'une à l'autre par une surface plane (38) côté tête.

10. Aube selon l'une des revendications précédentes, dans laquelle la pointe d'aube (14) a une extension constante sur ses zones (16, 18, 20, 22, 24) dans la direction principale (z).

11. Turbomachine comportant au moins une rangée d'aubes constituée d'une pluralité d'aubes (1) selon l'une des revendications précédentes.
